# EUROPEAN PATENT SPECIFICATION

(11) **EP 2 096 485 B1**
(45) Date of publication and mention of the grant of the patent: **22.01.2020**
(21) Application number: 08290195.0
(22) Date of filing: 28.02.2008
(51) Int. Cl.: G02C 1/02, G02C 5/12, G02C 5/20, G02C 5/22, G02C 3/00

(54) **Eyewear with adjustable temples**
Brille mit einstellbaren Bügeln
Lunettes à branches réglables

(43) Date of publication of application: 02.09.2009
(60) Divisional application: 19215824.4
(73) Proprietor: Honeywell International Inc., Morris Plains, NJ 07950 (US)
(72) Inventor: Lamontagne, Marc, Repentigny, Quebec J6A 1W1 (CA); Isabelle, Paul, Saint-Augustin-de-Desmaures, Quebec G3A 1A6 (CA); Doyon, Jean-Christophe, Terrebonne, Quebec J6X 4H5 (CA)
(74) Representative: Haseltine Lake Kempner LLP

(56) References cited:
- FR-A- 2 241 225
- US-A- 5 631 718
- US-A- 5 790 229
- US-A1- 2005 088 613

## Description

### Field of the invention

The present invention relates to eyewear having temples that can be adjusted to fit different shapes of wearer head.

### Background of the invention

Eyewear such as corrective glasses, safety glasses and sun glasses are generally mass produced for sale to a large market base. However, physical characteristics vary greatly from person to person, particularly those of the head and face. As a result, eyewear currently available are never suited for use by everybody and not all available eyewear will fit a potential wearer. For the wearer this translates to frustration and risk as it is necessary to try on many eyewear in order to find one that fits and even then there is a chance that with time an eyewear will be found uncomfortable. For the manufacturer and seller, this means lost profits as individual eyewear cannot be sold but to a limited segment of a purchasing population.

In particular eyewear temple pose problems since they should desirably contour the head of the wearer but there exists many different cranial shapes in the public at large. If the temples of an eyewear do not properly fit the wearer the eyewear can be uncomfortable to wear or improperly secured in wear. Eyewear suffering from such a drawback may not be used to its full value or may be dropped and broken or lost. If the eyewear is protective eyewear, dropping the eyewear from a wearer's head can expose the wearer to the dangers he sought to protect himself from.

Among the solutions that have been attempted in the past is the one described in U.S. Patent 6,059,411 to Paul E. Moody . This patent discloses a temple that can be extended with the extending portion so biased as to wrap around a person's head. However, this eyewear suffers the drawback that it cannot be adjusted to adopt a specific shape or to apply more or less pressure on the side of a wearer's head. Thus the eyewear displaces

US 2005/088613 discloses eyewear comprising the features recited in the preamble of claim 1.

In the context of the above, it can be appreciated that there is a need in the industry for an eyewear with adjustable temples that can be made to fit a variety of different wearer's heads.

### Summary of the invention

The present invention in its various aspects is as set out in the appended claims. In accordance with a second broad aspect, the present invention provides an eyewear comprising a frame with lens and temples mounted to the frame. Each of the temples comprises a branch having proximal and distal ends and a first curved portion with a first curvature. The first curved portion is made of a flexible material. Each of the temples further comprises a member slidably mounted to the branch, the member having a second curved portion with a second curvature, the second curved portion registering with the first curved portion, wherein the second curvature is different than the first curvature such that movement of the member along the branch displaces the branch from a first position in which a first pressure is applied to a side of a wearer's head to a second position in which a second pressure is applied to the side of the wearer's head, the second pressure being greater than the first pressure.

These and other aspects and features of the present invention will now become apparent to those of ordinary skill in the art upon review of the following description of specific embodiments of the invention and the accompanying drawings.

### Brief description of the drawings

A detailed description of examples of implementation of the present invention is provided hereinbelow with reference to the following drawings, in which:
Figure 1 shows an exploded view of an eyewear constructed in accordance with an embodiment of the invention;

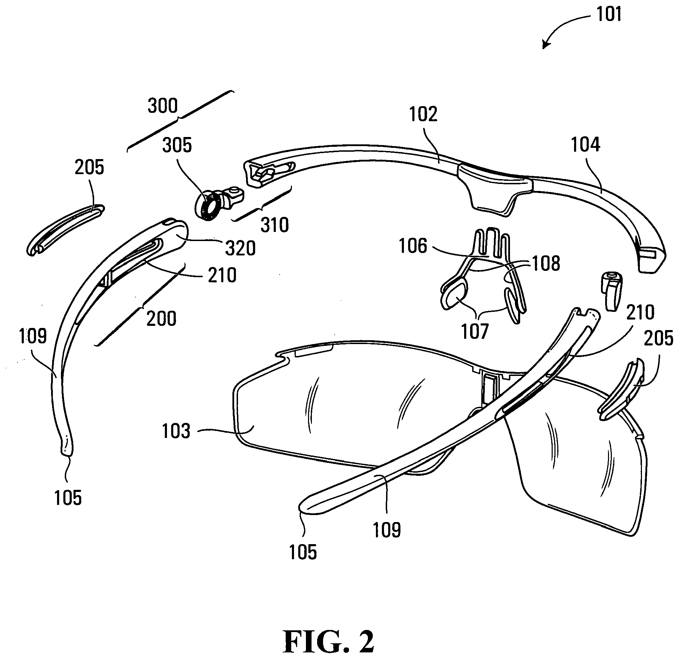

Figure 2 shows the eyewear of Figure 1 from a different perspective, also in an exploded view;

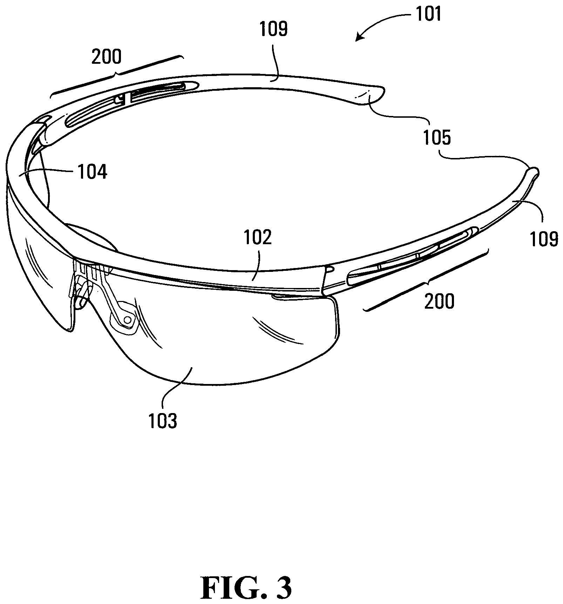

Figure 3 shows a perspective view of the eyewear;
Figure 4 shows a perspective view of the temple of the eyewear of Figure 3;
Figure 5 shows an exploded view of the temple of Figure 4;
Figure 6 shows a cross-section of the temple of Figure 4;
Figure 7 shows a perspective broken-away view of the temple of Figure 4;
Figure 8 shows another broken-away view of the temple of Figure 4;
Figure 9 shows the temple of Figure 4 with the sliding member in two different positions;
Figure 10A shows the temple of Figure 4 with the sliding member in a first position; and
Figure 10B shows the temple of Figure 4 with the sliding member in a second position.

In the drawings, embodiments of the invention are illustrated by way of example. It is to be expressly understood that the description and drawings are only for purposes of illustration and as an aid to understanding, and are not intended to be a definition of the limits of the invention.

### Detailed description of the embodiments

It should be clearly understood that like reference numerals are intended to identify the same structural elements, parts, portions or surfaces consistently throughout the several drawing figures, as such elements, parts, portions or surfaces may be further described or explained by the entire written specifications, of which this detailed description is an integral part. In describing the embodiments, specific terminology is resorted to for the sake of clarity but the invention is not intended to be limited to the specific terms so selected, and it is understood that each specific term comprises all equivalents.

Unless otherwise indicated, the drawings are intended to be read together with the specification, and are to be considered a portion of the entire written description of this invention. As used in the following description, the terms "horizontal", "vertical", "left", "right", "up", "down" and the like, as well as adjectival and adverbial derivatives thereof (e.g., "horizontally", "rightwardly", "upwardly", "radially", etc.), simply refer to the orientation of the illustrated structure as the particular drawing figure faces the reader.

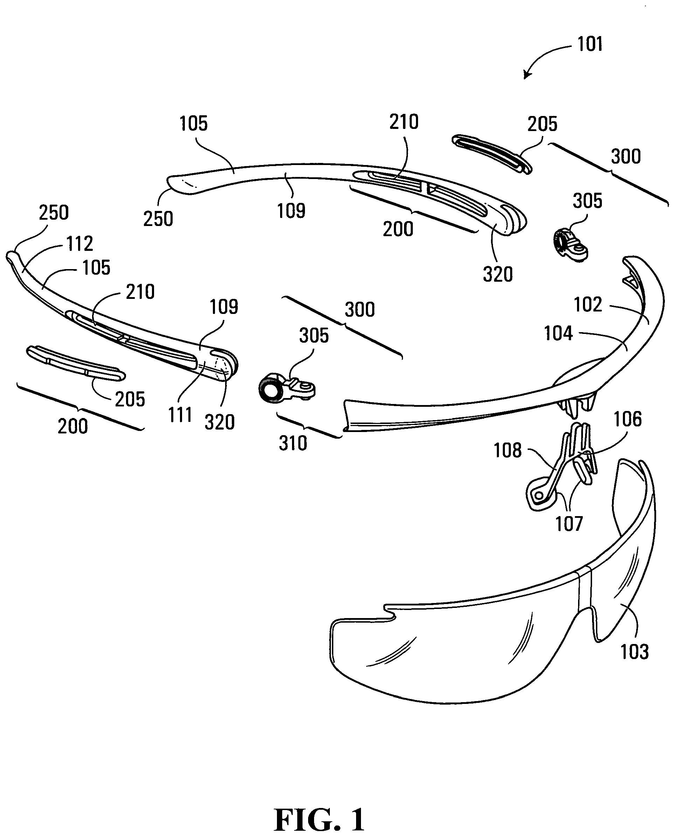

Figure 1 illustrates an eyewear 101 in an exploded view in accordance with a non-limiting embodiment. In this example, the eyewear 101 is a pair of safety glasses having a frame 102, lenses 103, a nosepiece 106 featuring two nose pads 107 and a pair of temples 105. In use, eyewear 101 rests comfortably on a user's head such that lenses 103 substantially cover the user's field of vision or substantially block the user's eyes from external elements. Eyewear 101 should be held securely such that eyewear 101 does not shift or fall off during regular use.

The nose piece 106 provides a point of support for the eyewear and may be fastened to the frame 102. In a preferred example, nosepiece 106 is an adjustable nosepiece, displaceable along a generally vertical axis for adjusting to various facial constructions. In this example, the nosepiece 106 comprises a releasable clamping mechanism that holds nosepiece 106 at a given position in a generally vertical channel. In order to adjust the height of the nosepiece with respect to the frame 102 and/or lenses 103, the clamping mechanism is released and nosepiece 106 is displaced vertically to a desired position whereupon the clamping mechanism is reengaged. Nosepiece 106 also comprises nose pads 107 at the end of nose pad branches 108. In a preferred example, the position of nose pads 107 with respect to the rest of the nosepiece 106 is also adjustable, for example by having deformable nose pad branches 108. In wear, the nosepiece 106 provides a point of support for the eyewear 101 and prevents movement of the eyewear relative to the face in certain directions, notably in the downwards (towards the chin) direction but also in the rearwards (towards the back of the head) direction. It is to be understood that although the nosepiece 106 here has been described as an adjustable nosepiece any other arrangement may be used. For example, the nosepiece 106 may take the form of any nose-supporting structure and may be embedded in or integral with the lenses 103 or frame 102 or may even be completely absent.

In the non-limiting embodiment of figure 1, the frame 102 is a semi-rimless frame made up primarily of a frame component 104 arranged along the top of the lenses 103 generally in a horizontal plane. Lenses 103 are fastened to frame component 104. The frame 102 holds the lenses 103 in place and may optionally rest, in wear, against the wearer's face thus anchoring the eyewear against certain movements, such as rearward movement. The frame 102 does not need to be a semi-rimless frame as illustrated in figure 1 but can take many shapes. For example, the frame can be a full frame (fully surrounding a unitary or a pair of lenses 103) or three-piece rimless (made up of three pieces anchored in the lenses 103). The frame 102 may be distinct from the lenses 103 as shown here or may be integral with the lenses 103.

Lenses 103 may be protective lenses, shaded lenses, optical-correction lenses or any other lenses. In the non-limiting embodiment shown here, lenses 103 is a unitary protective lens covering a substantial portion of the field of vision of both eyes. However it is to be understood that lenses 103 may be a pair of disjoint lenses or any other arrangement of lenses 103.

In the non-limiting embodiment shown in figure 1, eyewear 101 features a pair of temples 105 having a connection with frame 102 that includes a connection member 305 connected with the frame 102 by a hinge assembly 310. Hinge assembly 310 permits the pivotal motion of temples 105 about a first axis between an open and a closed position. Temples 105 each include a branch 109 that extends along a second axis from a proximal end 111, near the frame 102 to a distal end 112, which in wear is near the back of the wearer's head. In this non-limiting example, the branches 109 extend at an angle approximately normal to the frame component 104 when in the open position and can pivot to a closed position where they are angled approximately parallel to frame component 104. The eyewear 101 can thus be folded to a more compact form when not in use. It should be noted, however, that temples 105 can be connected to the frame 102 by any suitable means, with or without connection member 305. Furthermore, it is not necessary for temples 105 to be hinged to the frame 102, but temples 105 may be rigidly connected to the frame 102. Also, while temples 105 are drawn here as two separate branch-like component, it should be understood that any of a number of temple arrangement, forms and shapes are possible. For example, temples 105 may loop around a wearer's ear or head.
When the eyewear is worn, the temples 105 lie along the side of the wearers head and preferably contact both the side of the wearer's head and the upper auricular sulcus. The point of contact of the temple 105 with the upper auricular sulcus provides a point of anchoring against downward motion and thus helps hold the eyewear in place despite the pull of gravity. At the area of contact with the side of the wearer's head, the temples 105 may exert pressure against the side of the wearer's head with the resulting friction helping secure the eyewear in a given position on the wearer's head. Furthermore, although the branches 109 are said to extend along the second axis, it should be noted that the branches 109 do not necessarily have a perfectly straight form but are preferably curved to embrace a wearer's physical features. Thus branches 109 may preferably curve around the wearer's head, and optionally around the auricular sulcus and thus anchor the eyewear 101 against movement in multiple directions. It is to be understood that a branch 109 so curved is still said to extend along the second axis insofar as it approximates the second axis.

Thus the shape of branch 109 has an impact on the performance of eyewear 101. If the shape of branch 109 is not suited for the wearers head, eyewear 101 will be improperly secured or uncomfortable to wear. In order to adjust the shape of branch 109 to fit different heads, a novel adjusting mechanism 200 is provided in branch 109. Adjusting mechanism 200 comprises a section of branch 109 and a sliding member 205. Sliding the sliding member 205 within the adjusting mechanism causes the branch 109 to change its form, for example by changing its curvature, such that it becomes better suited for a different shape of wearer head.

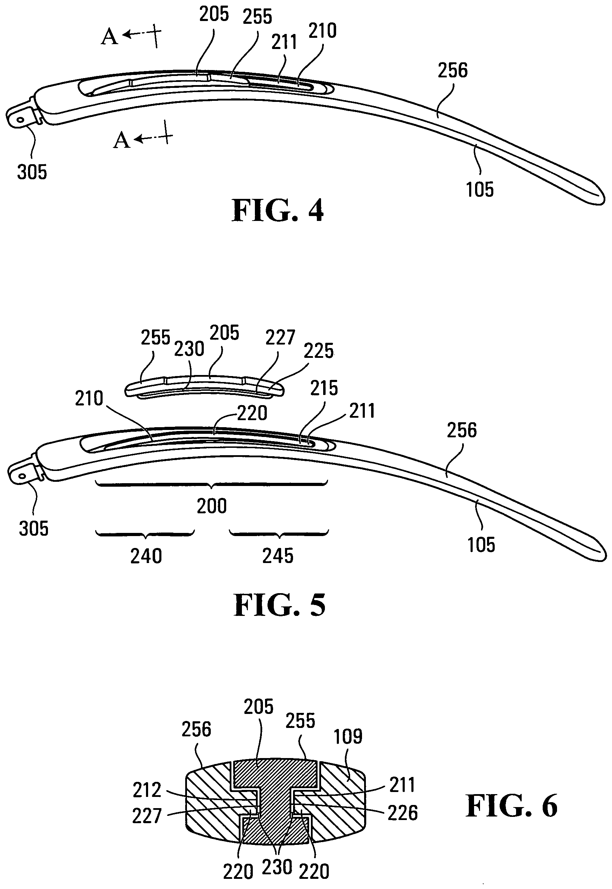

The adjusting mechanism will now be described in accordance to a non-limiting embodiment. Figure 4 shows a close-up of a temple 105 in accordance with a non-limiting embodiment. Branch 109 comprises an aperture 210 in which is lodged a sliding member 205.

As shown in an exploded view on figure 5, aperture 210 is defined by an internal wall 215 that has a top side 211 and a bottom side 212 that are opposed to one another. The two opposed sides of internal wall 215 each comprise a projection 220 that extend inwardly (downwardly from the top side and upwardly from the bottom side). In the non-limiting example shown, projection 220 takes the form of an elongated rail-like protrusion in the internal wall 215 generally following the longitudinal direction of the aperture. It should be noted that it is not necessary for projection 220 to be present on both opposed sides and that it may only be present on the top side 211 or the bottom side 212.

Sliding member 205 is slidably mounted within aperture 210. Sliding member 205 is shaped to fit into the aperture 210 and comprises a surrounding wall 225 having a top wall 226 and a bottom wall 227 that are opposed to each other and that register respectively with the top side 211 and the bottom side 212 of the internal wall 215. In the non-limiting embodiment shown, the top and bottom walls comprise an elongated groove 230 in which fits projection 220. Sliding member 205 is longitudinally shorter than aperture 210 and can slide in the longitudinal direction within aperture 210. Figure 6 shows a cross-section of branch 109 (on its side) with sliding member 205 inserted, the complementary relationship of groove 230 and projection 220 being clearly visible.

In addition to the above, sliding member comprises an external side 255, accessible to a wearer, that preferably follows generally the curvature of the top external side 256 of the branch. A wearer can apply force to external side 255 to slide slidable member 205 in aperture 210.

The branch 109 in at least a portion of the area of the adjusting mechanism 200 is made of flexible material, such that it can be deformed by appropriate forces. Preferably branch 109 returns to its original shape when the forces are removed. Sliding member 205 is preferably made of a different material than the branch 109, which material is less flexible than that of the branch 109 in the area of the adjusting mechanism 200 and is therefore not as easily deformed. Sliding member 205 is thus made of a rigid material

In a non-limiting example, the portion of branch 109 around the adjusting mechanism 200 is made of polycarbonate or of a combination of polycarbonate and polyester while the sliding member 205 is made of either Nylon™ 6 with fiber glass (for example, with 30% fiber glass), Nylon™ 66 or aluminum. In another non-limiting example, the portion branch 109 around the adjusting mechanism 200 is made of a material selected from the group consisting of Xylex™ X7203 by GE, Xylex™ X8300 by GE, Durolon™ VR-2210 by Policarbonatos do Brasil and Lexan™ EXL 1483C by GE. In a non-limiting example, the sliding member 205 is made of either Ultramid™ B3ZG6 by BASF or aluminum 380. Within the curve-adjusting section 200, branch 109 comprises a curved portion which in this non-limiting example is the projection 220. Projection 220 has a first curvature in the longitudinal direction in a horizontal plane. The first curvature is not necessarily constant but may be a function and even a discontinuous function. The first curvature may thus include a plurality of different radii of curvature and a plurality of different centers of curvature. In the non-limiting embodiment illustrated here, projection 220 has two sections 240, 245 each with a different constant curvature. In figure 5, section 240 is shown to be of similar size to section 245 but slightly bigger. It should be noted that the two sections can have any size relative to one another and that section 240 can be bigger, equal or smaller than section 245. It is to be understood that the curved portion of branch 109 may actually be partially or entirely straight, the curvature being of zero (infinite radius of curvature) where the projection 220 is straight.

Sliding member 205 include a curved portion which, in this non-limiting example is groove 230. Groove 230 has a second curvature which is different from the first curvature and which may be constant. In the non-limiting embodiment illustrated groove 230 has the same curvature as projection 220 has in section 240.

A curvature can be defined here by a radius of curvature and optionally by center of curvature. A tighter curve, having a shorter radius of curvature is said to have a higher curvature than a more elongated curve having a longer radius of curvature. The tighter curve has the greater curvature. The radius of curvature is defined here in the traditional mathematical sense, that is, it is the radius of an osculating circle at a point on a curve. While the radius of curvature is a constant at any given point on a curve, it can vary from point to point. Thus the radius of curvature, and likewise the curvature itself can be defined as a function along a path, such as along the path of a curve.

It is to be understood that for two curvatures to be the same, they must have the same radius of curvature along their entire length. Therefore, if the projection 220 in section 240 has the same curvature as the groove 230, the entire length of the groove 230 will register naturally with the projection 220 in section 240. However, the above withstanding, projection 220 is still considered to have a different curvature than groove 230 because beyond section 240, projection 220 does not have the same (in this example, constant) curvature as groove 230.

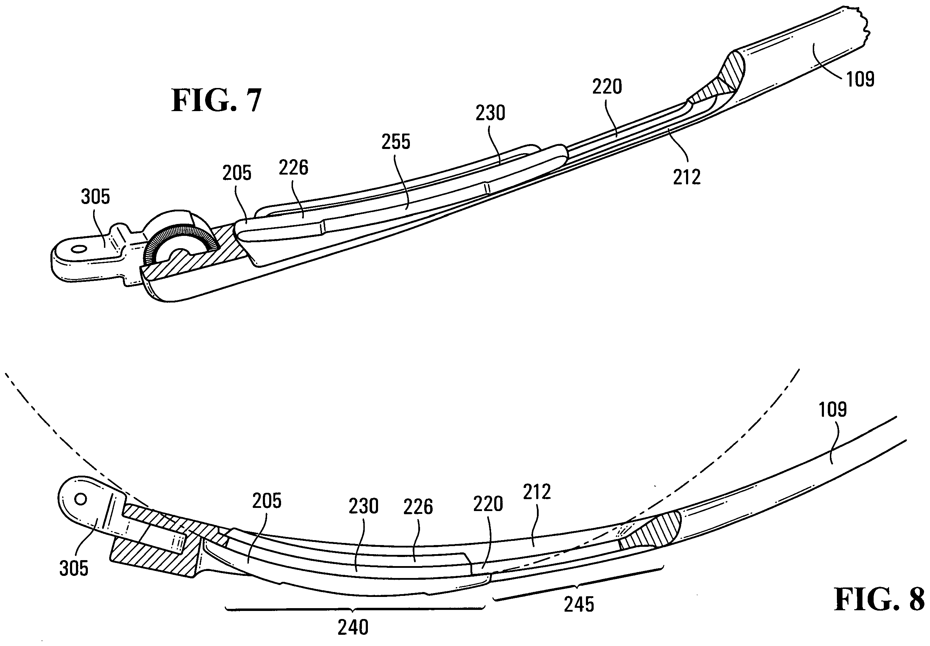

Figures 7 and 8 show a broken-away view of temple 105 with the branch 109 being cut away on one side of the aperture to better show the placement of the sliding member 205 within aperture 210. Here, sliding member 205 is confined within the aperture 210 but can slide longitudinally within it. Sliding member 205 is mated with section 240 of the projection 220, which is in a part of aperture 210 that is adjacent to the proximal end of branch 109. When sliding member 205 registers with section 240 of projection 220, sliding member is said to be in the neutral position. Since section 240 of projection 220 has the same (here, constant) curvature as groove 230 (an osculating circle is shown here in dotted line), the curved projection 220 fits naturally within the curved groove 230 and no force is applied by the rigid sliding member 205 onto the elastic branch 109. Advantageously it is not necessary for the projection 220 to follow exactly the curvature of branch 109 and branch 109 is therefore not required to have the curvature of groove 230 around section 240. Instead here the projection 220 deviates from the center of branch 109 such that internally to branch 109 the projection 220 can have the same curvature as groove 230 in section 240 while the branch itself has a lower curvature even around section 240 of projection 220.

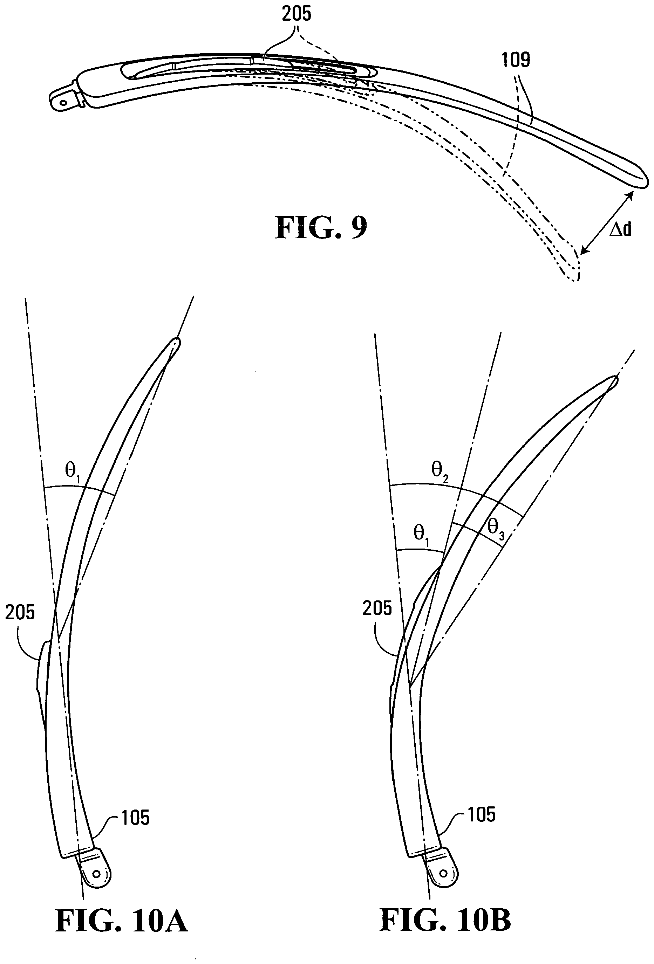

Section 245 is adjacent to section 240 and has a lower curvature than groove 230. The projection 220 in section 245 nevertheless has dimensions (e.g. width, depth) allowing it to fit into groove 230 as does the projection 220 in section 240. As sliding member 205 is manually slid towards section 240, the portions of projection 220 entering groove 230 are forced to conform to the curvature of groove 230 and bend accordingly. Preferably, sliding member 205 does not get significantly deformed by the projection 220 pressing against the groove 230 but rather causes the projection itself to acquire the curvature of the groove 230 where it lies in the groove. The projection 220 being integral with the rest of branch 109, as projection 220 is bent to a certain curvature the portion of branch 109 that is adjacent to projection 220 follows, causing branch 109 to acquire a different curved shape. Figure 9 shows the deformation of branch 109 as sliding member 205 is moved over the projection from section 240 to section 245. In this example, the tip 250 of the distal end of temple 105 is displace a distance of 0.125 to 0.5 inches as the sliding member 205 is moved from one longitudinal end of aperture 210 to the other longitudinal end of aperture 210. Branch 109 does not bend in the area surrounding section 240 but deforms around the area surrounding section 245 where the projection 220 has been bent in groove 230. Since in this non-limiting embodiment, the projection 220 is not deformed in section 240 whether the sliding member 205 is present there or not, it is not necessary for the projection 220 in section 240 or for the branch 109 surrounding this section to be made of elastic material that can be bent by sliding member 205. However in the present non-limiting embodiment, most of the branch 109 including all of the region of/surrounding adjustment mechanism 200 is made of the same material.

Figures 10A and 10B offer another view of the effect on temple 105 of sliding the sliding member 205. Figure 10A shows temple 105 with sliding member 205 in its neutral position. Figure 10B shows temple 105 with the sliding member 205 moved to the opposite end of aperture 210. As shown, the tip 240 of distal end of temple 105 is at an angle from an axis drawn between the proximal end of temple 105 and the point where temple 105 begins to deform when sliding member 205 is moved out of its neutral position. As the sliding member is moved away from its neutral position, the angle increases until the tip of the distal end has been displaced to a maximum distance from its starting position of between 0.125 and 0.5 inches.

In a non-limiting embodiment, the radius of curvature of groove 230 and projection 220 are between 1.5 and 10 inches. In another non-limiting embodiment, the groove 230 of the sliding member 205 has a constant radius of curvature of between 2.5 and 3 inches while the projection 220 has a varying radius of curvature of between 2.5 and 7 inches. It is possible, but not necessary, for the radius of curvature of the projection 220 in section 245 to be constant. In a specific non-limiting embodiment, groove 230 has a constant radius of curvature 2.5 inches while projection 220 includes a section 240 complementary to groove 230, having the same radius of curvature of 2.5 inches and another section 245 having a radius of curvature of 7 inches. In another non-limiting embodiment, the radius of curvature of the projection 220 in section 245 has a radius of curvature varying from 2.5 inches, at a point adjacent to section 240, to 7 inches.

The above example has been provided to illustrate and not limit the invention. It is to be understood that many other embodiments are possible.

Although the branch 109 has been shown here as having a projection 220 and the sliding member 205 as having a groove 230 to accommodate the projection 220, it will be appreciated that this can easily be reversed. In other words, the branch 109 could have the groove, and the sliding member the projection without departing from the intended scope of the invention. In this case opposed walls 226 and 227 would have a projection extending outwardly (upwardly from 226 and downwardly from 227) into grooves in opposed sides 211 and 212.

It is also not necessary for the sliding member to be nested within an aperture in the branch 105. Instead, sliding member may envelope, surround or partially surround branch 109 or otherwise define a channel extending longitudinally along said member in which branch 109 is received. For example, sliding member 205 may have a tubular construction, a C-shaped cross-section or any other suitable shape. Also, while the projection 220 has been shown here on both sides of aperture 210, it is to be understood that the shape and position of projection 220 shown here is only one of many possible arrangements and that there may be only one projection, or more than two, and that they may be positioned anywhere suitable including on an outer wall of branch 109. Furthermore, it is not necessary for the curved portion that engages sliding member 205 to be a projection, to be inside an aperture or to be part of an internal wall, but can be any suitable curved surface such as an outer wall of branch 109. Likewise, it is not necessary for the curved portion of sliding member 205 to be a groove or a projection but it can be any suitable portion of sliding member 205 such as the internal wall of a channel defined by sliding member 205.

In the non-limiting embodiment shown, the branch 109 has a first curved portion having a first curvature that is a discontinuous function featuring two constant curvatures. It will be appreciated, however that a wide variety of different curvatures are possible and may be suited for different applications. For example, the first curvature could be a function having a range of smoothly varying curvature (in other words curvature could be a function that is non-constant and continuous over a part of, or over the entire, first curved portion). Also, although the projection 220 has been shown here as including a section 240 having the same curvature as the sliding member 205, there may be more than one such sections or none at all and such a section can be positioned anywhere in adjustment mechanism 200 deemed suitable. For example, the neutral position mentioned above may be located in a part of adjustment mechanism adjacent to the distal end of temple 105.

It is to be understood that although the sliding member 205 has been illustrated here as having a curved portion with a greater curvature than the curved portion of branch 109, sliding member 205 may have a different or a smaller curvature than the curved portion of branch 109. In another non-limiting embodiment, section 240 of projection 220 still has the same curvature as groove 230 of sliding member 205 but section 245 has a higher curvature (a smaller radius of curvature) than sliding member 205. In this embodiment, moving the sliding member 205 out of its neutral position causes the branch 109 to deform such as to adopt a less curved shape. It is also possible for sliding member 205's curved portion to be more curved than a certain section of the curved portion of branch 109 but less curved than another section.

It should further be understood that even though adjusting mechanism has been shown here to cause a change in curvature in branch 109 in a generally horizontal plane, adjusting mechanism 200 could be used to adjust the shape of branch 109 in any other manner, for example by causing a change in curvature in a generally vertical plane.

## Claims

1. Eyewear (101) comprising a frame (102) with lens (103) and temples (105) mounted to said frame, each of said temples comprising:
(a) a branch (109) having proximal and distal ends (111; 112) and a first curved portion (220) with a first curvature, said first curved portion being made of a first material having a first flexibility, wherein said branch (109) comprises an internal wall (215) defining an aperture (210) extending longitudinally along said branch; and
(b) a member (205) made of a second material having a second flexibility, said member having a second curved portion (230) with a second curvature, said second curved portion registering with said first curved portion, wherein said first flexibility is greater than said second flexibility and said second curvature is different than said first curvature
**characterized in that** said member (205) is slidably mounted within said aperture (210), said member being longitudinally shorter than said aperture so that said member is capable of sliding in the longitudinal direction within said aperture,
such that movement of said member (205) along said branch (109) displaces said branch from a first position in which a first pressure is applied to a side of a wearer's head to a second position in which a second pressure is applied to the side of the wearer's head, said second pressure being greater than said first pressure, wherein sliding said member within said aperture causes said branch to change its curvature such that the branch becomes better suited for a different shape of wearer head.

2. Eyewear as defined in claim 1, wherein said second curvature is greater than said first curvature and wherein movement of said member (205) is towards said distal end (112) of said branch.

3. Eyewear as defined in claim 1, wherein said internal wall has top and bottom internal opposed sides (211; 212), said first curved portion comprising a top curved projection (220) extending downwardly from said top internal side and a bottom curved projection (220) extending upwardly from said bottom internal side.

4. Eyewear as defined in claim 3, wherein said member (205) has top and bottom opposed sides (226; 227) and an external side, said second curved portion comprising a top curved groove (230) provided on said top side of said member and a bottom curved groove (230) provided on said bottom side of said member.

5. Eyewear as defined in claim 1, wherein said top curved projection (220) registers within said top curved groove (230) and said bottom curved projection (220) registers within said bottom curved groove (230).

6. Eyewear as defined in any one of claims 1 to 5, wherein said branch (109) is made of a combination of polycarbonates and polyester.

7. Eyewear as defined in any one of claims 1 to 6, wherein said member (205) is made of Nylon 66, aluminum, or a combination of Nylon 6 with fiber glass.

8. Eyewear as defined in any one of claims 1 to 6, wherein said member (205) is made of aluminum.

9. Eyewear as defined in any one of claims 1 to 8, wherein said member (205) comprises an internal wall defining a channel for receiving said branch, said channel extending longitudinally along said member.

## Patentansprüche

1. Brille (101), umfassend ein Gestell (102) mit Gläsern (103) und Bügeln (105), die an dem Gestell befestigt sind, wobei jeder der Bügel Folgendes umfasst:
(a) einen ein nahe und ein entfernt gelegenes Ende (111; 112) aufweisenden Arm (109) und einen ersten gekrümmten Abschnitt (220) mit einer ersten Krümmung, wobei der erste gekrümmte Abschnitt aus einem eine erste Flexibilität aufweisenden ersten Material hergestellt ist, wobei der Arm (109) eine Innenwand (215) umfasst, die eine Öffnung (210) definiert, die sich in Längsrichtung entlang dem Arm erstreckt, und
(b) ein Element (205), das aus einem eine zweite Flexibilität aufweisenden zweiten Material hergestellt ist, wobei das Element einen zweiten gekrümmten Abschnitt (230) mit einer zweiten Krümmung aufweist, wobei der zweite gekrümmte Abschnitt mit dem ersten gekrümmten Abschnitt eingreift, wobei die erste Flexibilität größer als die zweite Flexibilität ist und sich die zweite Krümmung von der ersten Krümmung unterscheidet,
**dadurch gekennzeichnet, dass**
das Element (205) verschiebbar in der Öffnung (210) befestigt ist, wobei das Element in Längsrichtung kürzer als die Öffnung ist, so dass das Element in der Lage ist, sich auf eine solche Weise in der Längsrichtung in der Öffnung zu verschieben, dass eine Bewegung des Elements (205) entlang dem Arm (109) den Arm aus einer ersten Stellung, in der ein erster Druck auf eine Seite des Kopfes eines Trägers ausgeübt wird, in eine zweite Stellung, in der ein zweiter Druck auf die Seite des Kopfes des Trägers ausgeübt wird, verlagert, wobei der zweite Druck größer als der erste Druck ist, wobei ein Verschieben des Elements in der Öffnung bewirkt, dass der Arm auf eine solche Weise seine Krümmung ändert, dass sich der Arm für eine andere Form eines Trägerkopfes besser eignet.

2. Brille nach Anspruch 1, wobei die zweite Krümmung größer als die erste Krümmung ist und wobei eine Bewegung des Elements (205) zu dem entfernt gelegenen Ende (112) des Arms erfolgt.

3. Brille nach Anspruch 1, wobei die Innenwand eine obere und eine untere Innenseite (211; 212), die sich gegenüberliegen, aufweist, wobei der erste gekrümmte Abschnitt einen oberen gekrümmten Vorsprung (220), der sich von der oberen Innenseite nach unten erstreckt, und einen unteren gekrümmten Vorsprung (220), der sich von der unteren Innenseite nach oben erstreckt, umfasst.

4. Brille nach Anspruch 3, wobei das Element (205) eine obere und eine untere Seite (226; 227), die sich gegenüberliegen, und eine Außenseite aufweist, wobei der zweite gekrümmte Abschnitt eine obere gekrümmte Rille (230), die auf der oberen Seite des Elements vorgesehen ist, und eine untere gekrümmte Rille (230), die auf der unteren Seite des Elements vorgesehen ist, umfasst.

5. Brille nach Anspruch 1, wobei der obere gekrümmte Vorsprung (220) mit der oberen gekrümmten Rille (230) eingreift und der untere gekrümmte Vorsprung (220) mit der unteren gekrümmten Rille (230) eingreift.

6. Brille nach einem der Ansprüche 1 bis 5, wobei der Arm (109) aus einer Kombination aus Polycarbonaten und Polyester hergestellt ist.

7. Brille nach einem der Ansprüche 1 bis 6, wobei das Element (205) aus Nylon 66, Aluminium oder einer Kombination aus Nylon 6 und Glasfasern hergestellt ist.

8. Brille nach einem der Ansprüche 1 bis 6, wobei das Element (205) aus Aluminium hergestellt ist.

9. Brille nach einem der Ansprüche 1 bis 8, wobei das Element (205) eine Innenwand umfasst, die einen Kanal zum Aufnehmen des Arms definiert, wobei sich der Kanal in Längsrichtung entlang dem Element erstreckt.

## Revendications

1. Lunettes (101) comprenant une monture (102) avec verres (103) et branches (105) montées sur ladite monture, chacune desdites branches comprenant :
(a) une branche (109) ayant des extrémités proximale et distale (111 ; 112) et une première partie incurvée (220) avec une première courbure, ladite première partie incurvée étant constituée d'un premier matériau ayant une première flexibilité, ladite branche (109) comprenant une paroi interne (215) définissant une ouverture (210) s'étendant longitudinalement le long de ladite branche ; et
(b) un élément (205) constitué d'un second matériau ayant une seconde flexibilité, ledit élément ayant une seconde partie incurvée (230) avec une seconde courbure, ladite seconde partie incurvée s'ajustant avec ladite première partie incurvée, ladite première flexibilité étant supérieure à ladite seconde flexibilité et ladite seconde courbure étant différente de ladite première courbure
**caractérisées en ce que**
ledit élément (205) est monté coulissant à l'intérieur de ladite ouverture (210), ledit élément étant longitudinalement plus court que ladite ouverture de sorte que ledit élément est capable de coulisser dans la direction longitudinale à l'intérieur de ladite ouverture, de telle sorte que le mouvement dudit élément (205) le long de ladite branche (109) déplace ladite branche d'une première position dans laquelle une première pression est appliquée d'un côté de la tête d'un porteur à une seconde position dans laquelle une seconde pression est appliquée du côté de la tête du porteur, ladite seconde pression étant supérieure à ladite première pression, le coulissement dudit élément à l'intérieur de ladite ouverture amenant ladite branche à modifier sa courbure de sorte que la branche devient mieux adaptée pour une forme différente de tête du porteur.

2. Lunettes selon la revendication 1, ladite seconde courbure étant supérieure à ladite première courbure et le mouvement dudit élément (205) étant vers ladite extrémité distale (112) de ladite branche.

3. Lunettes selon la revendication 1, ladite paroi interne ayant des côtés opposés internes supérieur et inférieur (211 ; 212), ladite première partie incurvée comprenant une saillie supérieure incurvée (220) s'étendant vers le bas depuis ledit côté interne supérieur et une saillie inférieure incurvée (220) s'étendant vers le haut depuis ledit côté interne inférieur.

4. Lunettes selon la revendication 3, ledit élément (205) ayant des côtés opposés supérieur et inférieur (226 ; 227) et un côté externe, ladite seconde partie incurvée comprenant une rainure incurvée supérieure (230) prévue sur ledit côté supérieur dudit élément et une rainure incurvée inférieure (230) prévue sur ledit côté inférieur dudit élément.

5. Lunettes selon la revendication 1, ladite saillie incurvée supérieure (220) s'ajustant à l'intérieur de ladite rainure incurvée supérieure (230) et ladite saillie incurvée inférieure (220) s'ajustant à l'intérieur de ladite rainure incurvée inférieure (230).

6. Lunettes selon l'une quelconque des revendications 1 à 5, ladite branche (109) étant constituée d'une combinaison de polycarbonates et de polyester.

7. Lunettes selon l'une quelconque des revendications 1 à 6, ledit élément (205) étant constitué de Nylon 66, d'aluminium ou d'une combinaison de Nylon 6 et de fibre de verre.

8. Lunettes selon l'une quelconque des revendications 1 à 6, ledit élément (205) étant constitué d'aluminium.

9. Lunettes selon l'une quelconque des revendications 1 à 8, ledit élément (205) comprenant une paroi interne définissant un canal pour recevoir ladite branche, ledit canal s'étendant longitudinalement le long dudit élément.
